# EUROPÄISCHE PATENTANMELDUNG

(11) **EP 1 584 666 A1**
(43) Veröffentlichungstag der Anmeldung: **12.10.2005**
(21) Anmeldenummer: 04008554.0
(22) Anmeldetag: 08.04.2004
(51) Int. Cl.: C09D 161/28, C09D 7/12

(54) **Verwendung von modifizierten Melamin-Formaldehyd-Harzen zur Herstellung von beschichteten Holzwerkstoffen und Schichtwerkstoffen**

(71) Anmelder: Surface Specialties Germany GmbH & Co. KG, 65203 Wiesbaden (DE)
(72) Erfinder: Scholz, Wolfgang, Dr., 60594 Frankfurt (DE); Scholl, Frank, 61352 Bad Homburg (DE); Wonner, Johann, Dr., 63110 Rodgau (DE)
(74) Vertreter: Deckers, Hellmuth Alexander

(57) **Zusammenfassung**

Verwendung von durch Zusatz von feinteiligen Füllstoffen modifizierten Melamm-Formaldehyd-Harzen zur Herstellung von beschichteten Holzwerkstoffen und Schichtwerkstoffen, wobei die feinteiligen Füllstoffe eine mittlere Teilchengröße von 0,5 nm bis 200 nm aufweisen, Verfahren zur Herstellung von beschichteten Holzwerkstoffen und Schichtwerkstoffen unter Verwendung der mit feinteiligen Füllstoffen modifizierten Melamin-Formaldehyd-Harze und nach diesem Verfahren beschichtete Holzwerkstoffe und Schichtwerkstoffe

## Beschreibung

Die Erfindung betrifft die Verwendung von modifizierten Melamin-Formaldehyd-Harzen zur Herstellung von beschichteten Holzwerkstoffen und Schichtwerkstoffen.

Bei den verwendeten Melamin-Formaldehyd-Harzen kann es sich sowohl um unverätherte als auch um teilweise (5 % bis 95 % der Hydroxylgruppen) mit aliphatischen Alkoholen wie Methanol verätherte Typen handeln. Melamin-Formaldehyd-Harze sind allgemein bekannt, und beispielsweise beschrieben in Kunststoff-Handbuch, 2. Auflage, 1998, Band 10, S. 41ff. Ein wichtiges Anwendungsgebiet dieser Harze ist die Veredelung von Holzwerkstoffen in der Möbel- und in der Laminatfußbodenindustrie. Hierzu werden Dekorpapiere in einem ein- oder zweistufigen Verfahren mit flüssigen Zubereitungen enthaltend Melamin-Formaldehyd-Harze imprägniert (Massenanteil der Harzes in der Imprägnierungsflüssigkeit 50 % bis 100 %). Bei der zweiten Stufe kann es sich um eine Tränkung, ein Rakeln oder ein Streichverfahren handeln. Die so imprägnierten Papiere (Imprägnate) werden anschließend unter Druck und Temperatur auf einen Holzwerkstoff (beispielsweise "MDF" = mitteldichte Faserplatten, "HDF" = hochdichte Faserplatten oder Spanplatten) laminiert.

Von den Gebrauchseigenschaften der so hergestellten Laminate erwarten die Endanwender eine hohe Farbbrillanz, eine hohe Oberflächenhärte, eine große Kratzbeständigkeit, eine gute Chemikalienbeständigkeit, eine hohe Wasserdampfbeständigkeit und eine gute Oberflächenausbildung. Häufig wird ebenfalls von den Möbelherstellern gefordert, daß die mit Melaminharzen hergestellten Imprägnate beim Aufpressen auf Möbelteile hochglänzende Oberflächen bilden.

Die aus dem Stand der Technik bekannten Verfahren erfüllen dieses Anforderungsprofil nur zum Teil. Insbesondere die Kratzbeständigkeit und die Farbbrillanz sind verbesserungswürdig. Die Herstellung von hochglänzenden Oberflächen ist nach dem Stand der Technik ohne eine Rückkühlung beim Preßvorgang auf eine Temperatur von ca. 70 °C nicht möglich.

Speziell für Laminatfußbodenanwendungen ist auch eine hohe Abriebbeständigkeit gefordert. Ein Verfahren, dies zu erreichen, ist es, in das Melamin-Formaldehyd-Harz Korund (z.B. in einem Massenanteil von ca. 50 %, bezogen auf die Masse des Festharzes) einzutragen und die Mischung von Korund und Melamin-Formaldehyd-Harz auf ein Dekorpapier oder ein Overlaypapier aufzubringen. Eine branchenübliche Bezeichnung für diese Art des Auftrags ist Flüssig-Overlay.

Bei diesem Verfahren ist es schwierig, die Streichmasse so gleichmäßig über das Papier zu verteilen, so daß ein gleichmäßiger Auftrag erreicht wird. Daneben treten insbesondere bei dunklen Dekoren Transparenzstörungen oder Trübungen auf, die in erster Linie von dem eingebrachten Korund herrühren.

Es ist daher die Aufgabe dieser Erfindung, diese Nachteile zu vermeiden.

Dies wird erzielt, indem zu einem üblichen Melamin-Formaldehyd-Harz besonders feinteilige Füllstoffe mit einem Teilchengrößenbereich von 0,5 nm bis 200 nm in einem Massenverhältnis von 3 % bis 50 % (bezogen auf die Masse des Festharzes) zugegeben werden und das so modifizierte Harz anschließend über ein Tränk-, Streich- oder Rakelverfahren auf ein bevorzugt mit (Füllstofffreiem) Melamin-Formaldehyd-Harz vorgetränktes Dekorpapier oder Overlaypapier aufgebracht wird. Laminiert man das so imprägnierte Papier auf einen Holzwerkstoff, so erhält man einen Schichtwerkstoff, der gegenüber einer nicht mit derartigen feinteiligen Füllstoffen modifizierten Variante eine verbesserte Kratzfestigkeit und eine erhöhte Farbbrillanz aufweist. Verwendet man bei Herstellung des Laminats ein poliertes Pressblech, so ist es überraschenderweise möglich, auch ohne Rückkühlung eine glänzende Oberfläche herzustellen.

Gegenstand der vorliegenden Erfindung ist daher die Verwendung von durch Zusatz von feinteiligen Füllstoffen modifizierten Melamin-Formaldehyd-Harzen zur Herstellung von beschichteten Holzwerkstoffen und Schichtwerkstoffen, dadurch gekennzeichnet, daß die modifizierten Melamin-Formeldehyd-Harze Füllstoffe enthlaten mit einer mittleren Teilchengröße von 0,5 nm bis 200 nm. Bevorzugt werden diese Füllstoffe in einer solchen Menge eingesetzt, daß das Verhältnis der Masse der feinteiligen Füllstoffe zur Masse des Melamin-Formaldehyd-Harzes (Masse des Feststoffanteils bei Lösungen der Melamin-Formaldehyd-Harze) 3 % bis 50 % beträgt.

Bevorzugt ist der Bereich der mittleren Teilchengröße 5 nm bis 100 nm. Dabei ist es weiter bevorzugt, daß mindestens 50 % der Masse der Teilchen, besonders bevorzugt mindestens 70 %, und insbesondere mindestens 90 % der Masse der Teilchen einen Durchmesser im Bereich von 0,5 nm bis 200 nm, insbesondere von 5 nm bis 100 nm aufweisen. Als mittlere Teilchengröße wird hier das Massenmittel (Gewichtsmittel) der Teilchengröße bezeichnet.

Es ist weiter bevorzugt, Mischungen von Füllstoffen einzusetzen, wobei ein Teil des Füllstoffs in einem Teilchengrößenbereich von 0,5 nm bis 200 nm vorliegt, und ein weiterer Teil in einem Teilchengrößenbereich von 1 µm bis 500 µm, insbesondere 3 µm bis 180 µm. Dabei sind die Verhältnisse der Masse der feinteiligen Füllstoffe zu der des Füllstoffs mit "üblicher" Teilchengröße in Abhängigkeit der eingesetzten Masse des verwendeten Füllstoffs mit "üblicher" Teilchengröße variabel, bevorzugt aber in einem Bereich von 0,1: 0,9 bis 0,9:0,1, besonders bevorzugt 0,15:0,85 bis 0,7:0,3, und insbesondere 0,2:0,8 bis 0,6:0,4.

Bevorzugte Füllstoffe sind Oxide der Metalle Al, Zn, Si, Ti, Zr, Sn, In, Fe, Cu, Ta, V, Mo und W, Mischoxide der genannten Metalle, sowie auch Phosphate, Silicate, Carbonate, Aluminate, Zirkonate, Stannate, Sulfide oder Sulfate der genannten Metalle sowie auch der Metalle der zweiten und dritten Hauptgruppe des periodischen Systems. Ein besonders bevorzugter feinteiliger Füllstoff ist Aluminiumoxid (Korund) mit einer Teilchengröße von 0,5 nm bis 200 nm. Füllstoffe mit diesem Teilchengrößenbereich werden auch als "nanoskalige" Füllstoffe bezeichnet.

Es ist weiter bevorzugt, die nanoskaligen Füllstoffe vor der Einmischung in die Melamin-Formaldehyd-Harze mit reaktiven Silan-Derivaten zu behandeln ("Silanisieren").

Ein besonders bevorzugtes Verfahren gemäß der erfindungsgemäßen Verwendung ist, bei einer zweistufigen Imprägnierung in der ersten Stufe als Imprägniermittel ein Melamin-Formaldehyd-Harz einzusetzen, das frei von Füllstoffen ist oder zumindest maximal eine solche Masse von Füllstoffen enthält, die 5 % der Masse des Melamin-Formaldehyd-Harzes entspricht, und im zweiten Schritt wahlweise ein Melamin-Formaldehyd-Harz mit nanoskaligen Füllstoffen oder ein Melamin-Formaldehyd-Harz mit Füllstoffen, die Gemische sind von nanoskaligen Füllstoffen und solchen der oben angegebenen üblichen Größenverteilung von 3 µm bis 180 µm. Bei diesem besonders bevorzugten Verfahren hat es sich als Vorteil gezeigt, daß Füllstoffe derselben chemischen Zusammensetzung, aber in einem unterschiedlichen Teilchengrößenbereich eingesetzt werden. Derartige Mischungen ergeben in den untersuchten Fällen durchweg thixotrope Streichmassen.

Neben den bereits genannten verätherten, teilweise verätherten und unverätherten Melamin-Formaldehyd-Harzen können auch in bekannter Weise modifizierte Melamin-Formaldehyd-Harze eingesetzt werden, beispielsweise mit ein- oder mehrwertigen Alkoholen wie Glykol, Diäthylenglykol, Triäthylenglykol oder Polyäthylenglykolen, 1,4-Butandiol, Sorbit, Trimethylolpropan, Zuckern oder Phenoxyäthanol modifizierte Harze, mit Amiden wie Harnstoff, Caprolactam oder Toluolsulfonamid modifizierte Harze, und mit Schwefelverbindungen wie Natrium(bi)sulfit oder Natriumsulfamat modifizierte Harze. Ebenso können anstelle der reinen Melamin-Formaldehyd-Harze auch Aminoplastharze eingesetzt werden, die Mischungen von Melamin mit Guanaminen wie Caprinoguanamin oder Benzoguanamin enthalten. Selbstverständlich können die modifizierten Harze ebenso unveräthert, teilweise oder vollständig veräthert sein mit den üblicherweise verwendeten aliphatischen Alkoholen mit 1 bis 4 Kohlenstoffatomen, insbesondere Methanol, sowie n- und iso-Butanol sowie auch deren Mischungen.

Es ist erfindungsgemäß auch möglich, die mit nanoskaligen Füllstoffen modifizierten Harze in Mischung mit wäßrigen Dispersionen von Polymerisaten, insbesondere mit Acrylat- und Methacrylat-Copolymerisat-Dispersionen, einzusetzen.

Gemäß der beschriebenen Verwendung hergestellte Schichtwerkstoffe und beschichtete Holzwerkstoffe zeichnen sich durch hohen Glanz, hohe Härte und Kratzbeständigkeit, niedrigen Abrieb und gute Wasser- und Chemikalienbeständigkeit aus.

Die Erfindung wird durch die folgenden Beispiele erläutert.

### Beispiel 1

Ein Dekorpapier (flächenbezogene Masse, "Grammatur" 78 g/m²) wurde mit einer Tränkflotte aus einem Melaminformaldehyd-Tränkharz (®Madurit MW 490 S, Surface Specialties Germany GmbH & Co. KG) und Additiven (Härter: ®Madurit Härter MH 835, Surface Specialties Germany GmbH & Co. KG, Masse bezogen auf die Masse des Festharzes 0,9 %); Netzmittel: ®Hypersal XT 793 (Surface Specialties Germany GmbH & Co. KG), Masse bezogen auf die Masse des Festharzes 0,4 %; und Trennmittel: ®Additol VXT 3750 (Surface Specialties Germany GmbH & Co. KG), Masse bezogen auf die Masse des Festharzes 0,2 %) vorimprägniert. Danach wurde mit einer 75 µm-Rakel eine Streichmasse bestehend aus ®Madurit MW 490 S (verdünnt mit deionisiertem Wasser auf einen Festkörper-Massenanteil von 33 %), nanoskaligem Aluminiumoxid (mittlere Teilchengöße 13 nm, Masse bezogen auf die Masse des Festharzes 50' %) und den zugehörigen Additiven wie oben (Härter: ®Madurit Härter MH 835, Masse bezogen auf die Masse des Festharzes 0,9 %; Netzmittel: ®Hypersal XT 793, Masse bezogen auf die Masse des Festharzes 0,4 %; und Trennmittel: ®Additol VXT 3750, Masse bezogen auf die Masse des Festharzes 0,2 %) aufgebracht. Das imprägnierte Papier wurde bei einer Temperatur von 120 °C bis zu einer Restfeuchte von ca. 6 % getrocknet. Anschließend wurde das getrocknete Imprägnat auf eine handelsübliche 19 mm dicke Spanplatte gelegt und in einer Beschichtungspresse bei 30 bar, 180 °C und 30 s auf einem halbglänzenden Preßblech (HM 60) verpreßt.

### Beispiel 2

Es wurde verfahren wie in Beispiel 1, anstelle von reinem nanoskaligem Aluminiumoxid wurde ein Gemisch von nanoskaligem Aluminiumoxid (mittlere Teilchengröße 13 nm) und einem handelsüblichen Aluminiumoxid-Füllstoff (mittlere Teilchengröße 26,7 µm ±1,5 µm) im Massenverhältnis 1:1 eingesetzt.

### Vergleichsbeispiel 1

Es wurde verfahren wie in Beispiel 1, jedoch wurde kein Aluminiumoxid in die Streichmasse eingemischt.

### Vergleichsbeispiel 2

Es wurde verfahren wie in Beispiel 1, jedoch wurde anstelle des nanoskaligen Aluminiumoxid ein handelsüblicher Alummiumoxid-Füllstoff (mittlere Teilchengröße 26,7 µm ± 1,5 µm) eingesetzt, wobei dessen Masse 50 % der Masse des Festharzes betrug.

### Vergleichsbeispiel 3

Es wurde wie in Beispiel 1 verfahren, jedoch wurde auf den Schritt der Vorimprägnierung verzichtet.

### Zusammenfassung der anwendungstechnischen Ergebnisse der Beispiele 1 und 2 sowie der Vergleichsbeispiele 1 bis 3:

Auffällig war der optisch unterschiedliche Eindruck der hergestellten Laminate. Wie an Beispiel 1 im Vergleich zum Vergleichsbeispiel 1 zu erkennen ist, führte die Verwendung des nanoskaligen Aluminiumoxid zu einer signifikanten Verbesserung der Transparenz und der Brillanz. Wie mit Vergleichsbeispiel 3 gezeigt wurde, ist hierfür eine Vortränkung mit nicht Füllstoff-haltigem Melamin-Formaldehyd-Harz notwendig, da ansonsten eine milchige, unansehnliche Oberfläche erhalten wurde.

Ähnliches gilt auch, wenn anstelle eines nanoskaligen Füllstoffs ein kommerziell erhältlicher Füllstoff üblicher Teilchengröße verwendet wurde. Es ist auch möglich, Mischungen von Füllstoffen üblicher Teilchengröße und nanoskaliger Füllstoffe einzusetzen; dabei wurden Beschichtungen mit verringerter Transparenz erhalten (Beispiel 2). Der Einsatz von nanoskaligem Aluminiumoxid gemäß der im Beispiel 1 erläuterten Variante führt neben einer signifikanten Erhöhung der Kratzfestigkeit und des Glanzgrades insbesondere zu einer wesentlichen Verbesserung der Hydrolysebeständigkeit, wie sie z.B. bei der Verwendung von Melamin-Formaldehyd-Harzen für Außenanwendungen notwendig ist.

| Beispiel | 1 | 2 | V1 | V2 | V3 |
|---|---|---|---|---|---|
| Optischer Eindruck | 5 | 3 bis 4 | 4 | 2* | 1 |
| Kratzfestigkeit in N | 4 | 3 | 2,5 | -# | -# |
| Glanz | 106 | 91 | 89 | -# | -# |
| Beständigkeit gegenüber 18 %iger.wäßriger Salzsäure | 4 | 2 bis 3 | 1 | -# | -# |

Der optische Eindruck wurde bewertet nach der folgenden Skala:
5: hochbrillante Oberfläche bis zu
1: milchige Oberfläche, bei der die Grundfarbe des Dekors nicht mehr eindeutig zu erkennen war.
*: uneinheitliches Aussehen über die Fläche
#: nicht bestimmt

Die Kratzfestigkeit wurde gemäß der Norm EN 438-2 gemessen. In der lichtnuktoskopischen Untersuchung zeigte es sich, daß im Beispiel 1 bei der Prüfung der Ritzhärte kein Oberflächenabtrag zu beobachten war, im Gegensatz zu den Vergleichsbeispielen, bei denen ein Substanzabtrag an der Oberfläche festgestellt wurde. In den mit # gekennzeichneten Beispielen wurde die Kratzfestigkeit nicht geprüft, da bereits die optischen Eigenschaften ungenügend waren.

Bei des Bestimmung des Glanzes wurde die Intensität des reflektierten Lichts im Verhältnis zu dem eingestrahlten Licht bei einem Einfallswinkel von 60° gemessen.

Bei der Prüfung der Beständigkeit gegenüber halbkonzentrierter Salzsäure wird die Veränderung der Oberfläche des Laminats nach einer Einwirkzeit von zwei Stunden beurteilt nach der Skala:
5: keine sichtbare Änderung bis
1: vollständige Zerstörung des Dekors.

### Verbesserung in der Transparenz beim "Flüssig-Overlay Verfahren"

### Beispiel 3

Ein transparentes Overlaypapier (flächenbezogene Masse "Grammatur" 27 g/m²) wurde mit einer Tränkflotte aus einem Melamin-Formaldehyd-Tränkharz (®Madurit MW 490 S) und Additiven (Härter: ®Madurit Härter MH 835, Masse bezogen auf die Masse des Festharzes 0,9 %; Netzmittel: Hypersal XT 793, Masse bezogen auf die Masse des Festharzes 0,4 %, Trennmittel: ®Additol VXT 3750, Masse bezogen auf die Masse des Festharzes 0,2 %) vorimprägniert. Danach wurde mit einer 50 µm-Rakel eine Streichmasse folgender Zusammensetzung auf das Papier aufgebracht:
®Madurit MW 490 S (Festkörper-Massenanteil 50 %)
®Alodur SPW 360, Fa. Treibacher (Aluminiumoxid-Füllstoff, Masse bezogen auf die Masse des Festharzes 53%)
Nanoskaliges Aluminiumoxid (Aluminiumoxid C®, Degussa AG, Masse bezogen auf die Masse des Festharzes 20 %)
®Madurit Härter MH 835 (Masse bezogen auf die Masse des Festharzes 0,9 %)
®Hypersal XT 793 (Masse bezogen auf die Masse des Festharzes 0,4 %)
®Additol VXT 3750 (Masse bezogen auf die Masse des Festharzes 0,2 %)

Das Papier wurde bei einer Temperatur von 120 °C bis zu einem restlichen Massenanteil von flüchtigen Stoffen von 6,5 % getrocknet und anschließend in einer Beschichtungspresse bei 30 bar, 180 °C und 30 s auf einem halbglänzenden Preßblech (HM 60) mit einem Dekorpapier verpreßt. Das hierfür verwendete Dekorpapier wurde gemäß dem Stand der Technik mit einer Tränkflotte aus einem Melamin-Formaldehyd-Tränkharz (®Madurit MW 490 S) und Additiven (Härter: ®Madurit Härter MH 835, Masse bezogen auf die Masse des Festharzes 0,9 %, Netzmittel: ®Hypersal XT 793, Masse bezogen auf die Masse des Festharzes 0,4 %, Trennmittel: ®Additol VXT 3750, Masse bezogen auf die Masse des Festharzes 0,2 %) vorimprägniert.

### Beispiel 4

Beispiel 3 wurde wiederholt, wobei jedoch das hierbei verwendete nanoskalige Aluminiumoxid silanisiert wurde. Hierzu wurden 5 g nanoskaliges Aluminiumoxid, 30 ml Aminopropyltrimethoxysilan und 100 mg Maleinsäureanhydrid in ca. 30 ml Aceton gegeben und unter Rühren während 5 Stunden bei einer Temperatur von 50 °C gehalten. Danach wurde abgekühlt, filtriert und bei 60 °C unter vermindertem Druck (100 mbar = 100 hPa) getrocknet.

### Vergleichsbeispiel 4

Beispiel 3 wurde wiederholt, jedoch wurde eine Streichflotte (Imprägnierungsmittel) verwendet, die kein Aluminiumoxid enthielt.

### Anwendungstechnische Unterschiede von Beispiel 3 und Vergleichsbeispiel 4

Im Vergleich zu Laminaten, die gemäß dem Vergleichbeispiel 4 hergestellt wurden, zeigten Laminate, die gemäß dem Beispiel 3 hergestellt worden waren, Transparenzvorteile. Bei der Prüfung des Abriebverhaltens nach EN 13299 wurde ein gleichmäßigeres Abriebverhalten gefunden.

## Patentansprüche

1. Verwendung von durch Zusatz von feinteiligen Füllstoffen' modifizierten Melamin-Formaldehyd-Harzen zur Herstellung von beschichteten Holzwerkstoffen und Schichtwerkstoffen, **dadurch gekennzeichnet, daß** die feinteiligen Füllstoffe eine mittlere Teilchengröße von 0,5 nm bis 200 nm aufweisen.

2. Verwendung nach Anspruch 1, **dadurch gekennzeichnet, daß** die Masse der feinteiligen Füllstoffe 3 % bis 50 % der Masse des Melamin-Formaldehyd-Harzes beträgt.

3. Verwendung nach Anspruch 1, **dadurch gekennzeichnet, daß** die Füllstoffe ausgewählt sind aus Oxiden der Metalle Al, Zn, Si, Ti, Zr, Sn, In, Fe, Cu, Ta, V, Mo und W, deren Mischoxiden, und den Sulfaten, Phosphaten, Silicaten, Carbonaten, Aluminaten, Zirkonaten, Stannaten, Sulfiden und Sulfaten der genannten Metalle sowie der Metalle der zweiten und dritten Hauptgruppe des periodischen Systems.

4. Verwendung nach Anspruch 1, **dadurch gekennzeichnet, daß** die feinteiligen Füllstoffe vor der Einmischung in die Melamin-Formaldehyd-Harze mit reaktiven Silanderivaten behandelt werden.

5. Verwendung nach Anspruch 1, **dadurch gekennzeichnet, daß** zusätzlich zu den feinteiligen Füllstoffen Füllstoffe mit einer mittleren Teilchengröße im Bereich von 1 bis 500 µm eingesetzt werden.

6. Verfahren zur Herstellung von beschichteten Holzwerkstoffen und Schichtwerkstoffen umfassend die Schritte
- Imprägnieren von Papieren ausgewählt aus Dekorpapieren und Overlaypapieren mit einem Melamin-Formaldehyd-Harz, das maximal 5 % seiner Masse an Füllstoffen enthält,
- Beschichten des imprägnierten Papiers der ersten Stufe mit einer Streichmasse enthaltend ein mit feinteiligen Füllstoffen modifizierten Melamin-Formaldehyd-Harzes,
- Trocknen des beschichteten Papiers,
- Aufpressen des getrockneten Papiers in einer Beschichtungspresse oder in einem Beschichtungswalzenstuhl auf Platten von Holzwerkstoffen ausgewählt aus Spanplatten und Faserplatten,
**dadurch gekennzeichnet, daß** die feinteiligen Füllstoffe eine mittlere Teilchengröße von 0,5 nm bis 200 nm aufweisen.

7. Verfahren nach Anspruch 6, **dadurch gekennzeichnet, daß** die Melamin-Formaldehyd-Harze unveräthert oder teilweise veräthert sind.

8. Verfahren nach Anspruch 6, **dadurch gekennzeichnet, daß** Melamin-Formaldehyd-Harze mit ein- oder mehrwertigen Alkoholen, Amiden oder Schwefelverbindungen oder durch Zusatz von Acrylatdispersionen modifiziert sind.

9. Verfahren nach Anspruch 6, **dadurch gekennzeichnet, daß** die Melamin-Formaldehyd-Harze Guanamine ausgewählt aus Caprinoguanamin und Benzoguanamin enthalten.

10. Verfahren nach Anspruch 6, **dadurch gekennzeichnet, daß** Mischungen von Füllstoffen eingesetzt werden, wobei feinteilige Füllstoffe mit einer Teilchengröße im Bereich von 0,5 nm bis 200 nm und Füllstoffen mit einer Teilchengröße im Bereich von 1 µm bis 500 µm eingesetzt werden, und daß sich deren Massen verhalten wie 0,1:09, bis 0,9:0,1.

11. Beschichtete Holzwerkstoffe und Schichtwerkstoffe erhältlich nach dem Verfahren des Anspruchs 6.

12. Verwendung von beschichteten Holzwerkstoffen und Schichtwerkstoffen nach Anspruch 11 für Möbelteile und Laminatfußböden.
